# EUROPEAN PATENT APPLICATION

(11) **EP 1 576 998 A2**
(43) Date of publication of application: **21.09.2005**
(21) Application number: 05005586.2
(22) Date of filing: 15.03.2005
(51) Int. Cl.: B01D 46/24, F01N 3/022, B01D 53/86, B01D 53/94

(54) **Exhaust gas filter, method of manufacturing the exhaust gas filter, and exhaust gas processing device using the exhaust gas filter**

(30) Priority: 17.03.2004 JP 2004077198; 07.02.2005 JP 2005030946
(71) Applicant: KABUSHIKI KAISHA TOYOTA CHUO KENKYUSHO, Aichi-ken, 480-1192 (JP); Toyota Jidosha Kabushiki Kaisha, Toyota-shi, Aichi-ken 471-8571 (JP)
(72) Inventor: Asano, Akihiko c/o K.K. Toyota Chuo Kenkyusho, Aichi-gun, Aichi-ken, 480-1192 (JP); Kurazono, Koichi c/o K.K. Toyota Chuo Kenkyusho, Aichi-gun, Aichi-ken, 480-1192 (JP); Hayashi, Hidemitsu c/o K.K. Toyota Chuo Kenkyusho, Aichi-gun, Aichi-ken, 480-1192 (JP); Kubo, Shuichi c/o K.K. Toyota Chuo Kenkyusho, Aichi-gun, Aichi-ken, 480-1192 (JP); Tani, Takao c/o K.K. Toyota Chuo Kenkyusho, Aichi-gun, Aichi-ken, 480-1192 (JP); Tanaka, Toshiaki, Aichi-ken 471-8571 (JP)
(74) Representative: Kramer - Barske - Schmidtchen

(57) **Abstract**

An exhaust gas filter including a filter base body which has many pores and has a flow-in surface, in which exhaust gas containing particulate matter flows, and an exhaust surface, from which purified gas is exhausted, the exhaust gas filter having at least a function of removing the particulate matter from the exhaust gas by passing the exhaust gas through the filter base body from the flow-in surface toward the exhaust surface, wherein a micropore structure, in which agglomerates of particulates having fine gaps are connectedly provided and which is air-permeable and which collects the particulate matter contained in the exhaust gas, is provided at the filter base body at a surface and/or within the pores which open and communicate the flow-in surface and the exhaust surface to and with one another. A method of manufacturing the exhaust gas filter comprises forming a micropore structure precursor and sintering the micropore structure precursor. An exhaust gas processing device comprises a flow-in port, an exhaust port, a gas flow path connecting the flow-in port and the exhaust port, and the exhaust gas filter.

## Description

### BACKGROUND OF THE INVENTION

### Field of the Invention

The present invention relates to an exhaust gas filter which removes particulate matter from exhaust gas exhausted from internal combustion engines such as diesel engines or the like, or from various types of combustion/incineration facilities such as factories or the like, and to a method of manufacturing the exhaust gas filter and an exhaust gas processing device.

### Description of the Related Art

Exhaust gasses, which are exhausted from various types of combustion/incineration facilities such as factories or the like, or in particular, from internal combustion engines such as diesel engines or the like, generally include particulate matter (hereinafter abbreviated as "PM" upon occasion) whose main component is carbon, in addition to nitrogen oxides NOx, carbon monoxide (CO), hydrocarbons, and the like.

Exhaust gasses directly pollute the atmosphere due to these gas components and particulate matter. In addition, they secondarily pollute water sources, such as soil, rivers, and the like, due to rain falling from a polluted atmosphere.

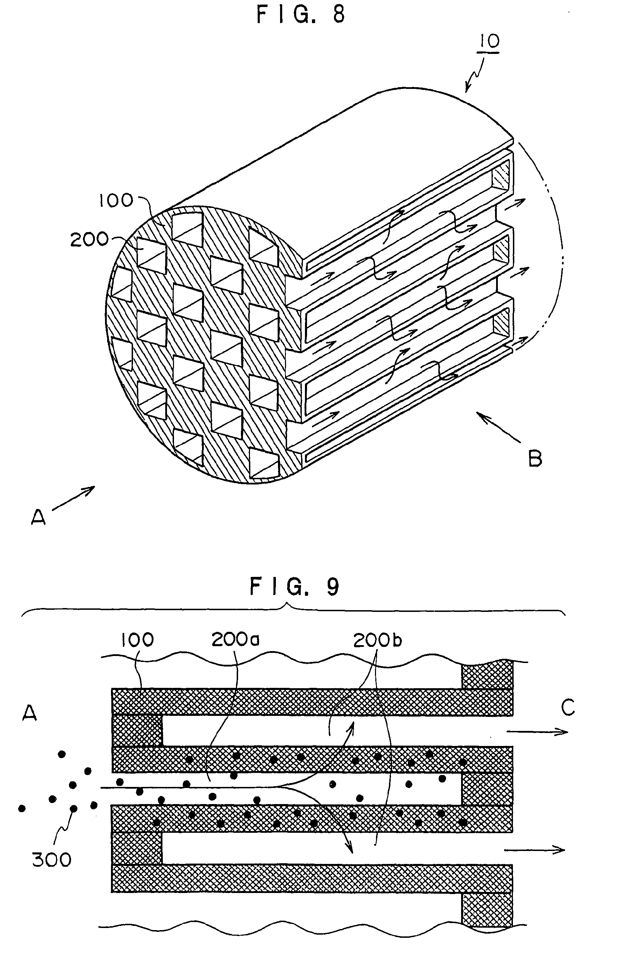

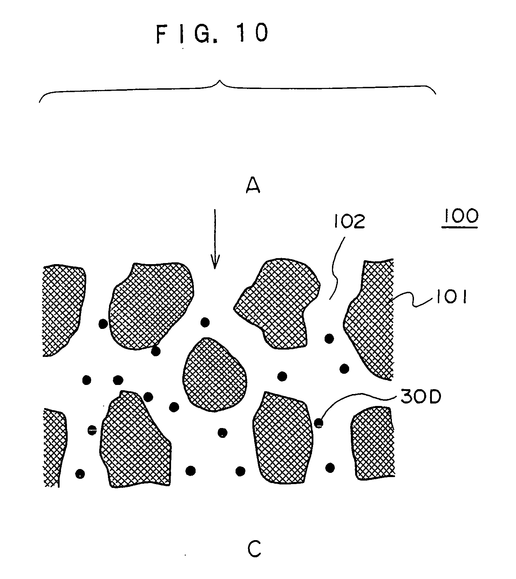

Such exhaust gasses are processed by an exhaust gas processing device having an exhaust gas filter. Figs. 8 through 10 illustrate an example of the structure of a conventional, typical exhaust gas processing device and exhaust gas filter. Fig. 8 is a schematic perspective view, a portion of which is in cross-section, showing an example of an exhaust gas processing device. Fig. 9 is a schematic sectional view showing a partitioning wall structure of the exhaust gas processing device shown in Fig. 8. Fig. 10 is a schematic sectional view in which a portion of the partitioning wall (exhaust gas filter) shown in Fig. 9 is illustrated in an enlarged manner. In Figs. 8 through 10, reference numeral 10 is an exhaust gas processing device, 100 is a partitioning wall (an exhaust gas filter), 101 is a filter base body structural portion, 102 are pores, 200 are gas flow paths, and 300 is particulate matter.

The exhaust gas processing device 10 shown in Fig. 8 has a cylindrical shape. Fig. 8 shows a cross-section perpendicularly intersecting the axial direction of this cylinder (the surface indicated by A in Fig. 8), and a cross-section parallel to the axial direction (the surface designated by B in Fig. 8). The main structure of the exhaust gas filter is formed from the partitioning wall 100 and the gas flow paths 200 which are enclosed by the partitioning wall 100. Inflow ports and exhaust ports, neither of which are illustrated, are provided at the near side in the axial direction and at the far side in the axial direction, respectively.

The exhaust gas processing device 10 shown in Fig. 8 is structured from a filter base body (carrier) having a honeycomb structure (a lattice structure) which is fabricated from a porous ceramic. The filter base body has a large number of cells in the direction of the flow of the exhaust gas, and the upstream side end portions and the downstream side end portions, as seen in this direction of the exhaust gas flow, are closed alternately. A large number of pores (voids) are formed within the partitioning wall 100 between the respective cells. The exhaust gas, which flows in the cells (exhaust gas flow-in gas flow paths) whose exhaust gas upstream side end portions are open, passes through the pores of the partitioning wall 100, and is exhausted from flow-out gas flow paths whose downstream side end portions are open. At this time, the particulate matter is collected within the pores of the partitioning wall 100.

Fig. 9 is an enlargement of the surface which is indicated by B in Fig. 8. In detail, Fig. 9 shows the flow of the exhaust gas, which flows-in from the flow-in port side of the exhaust gas processing device 10 (the side marked A in Fig. 9), and of the purified gas, which is purified by passing through the partitioning wall 100 and is exhausted toward the exhaust port side (the side marked C in Fig. 9). In the process of flowing from side A toward side C in Fig. 9, the exhaust gas, which flows-in from the flow-in port side and which includes the particulate matter 300, passes through flow-in gas flow paths 200a, and passes through the partitioning wall 100 which is structured from the exhaust gas filter. At this time, the particulate matter 300 included in the exhaust gas is removed by the partitioning wall 100. The purified gas, in which the particulate matter 300 has been removed from the exhaust gas, flows through exhaust gas flow paths 200b from side A toward side C, and is ultimately exhausted from the exhaust ports.

Fig. 10 shows the state of the exhaust gas passing through the partitioning wall 100. In Fig. 10, the partitioning wall 100 is formed from the filter base body structural portion 101, and the pores 102 which are formed by the filter base body structural portion 101. Reference letter A indicates the flow-in gas flow path 200a side, and reference letter C indicates the flow-out gas flow path 200b. When the exhaust gas passes through the partitioning wall 100, as shown in Fig. 10, the exhaust gas including the particulate matter 300 flows in the pores 102 from the A side toward the C side. In this process, the particulate matter 300 is removed from the exhaust gas by adhering to the surfaces of the filter base body structural portion 101 (the pore wall surfaces).

In the conventional exhaust gas processing device which is shown as an example in Figs. 8 through 10, the collection efficiency with respect to the particle diameter of the particulate matter, and the relationships among the pore diameter of the exhaust gas filter, the collection efficiency of the particulate matter, the pressure drop of the exhaust gas processing device, and the exhaust gas processing time from the start (i.e., from the state of non-use or the state immediately after regeneration), are generally such as shown in Figs. 11 through 14. Fig. 11 is a graph showing the definitions of the collection efficiency and the collection efficiency per particle diameter of the particulate matter. Fig. 12 is a graph showing changes in the collection efficiency with respect to pore diameter. Fig. 13 is a graph showing changes in the pressure drop with respect to pore diameter. Fig. 14 is a graph showing changes in the collection efficiency with respect to the exhaust gas processing time from the start.

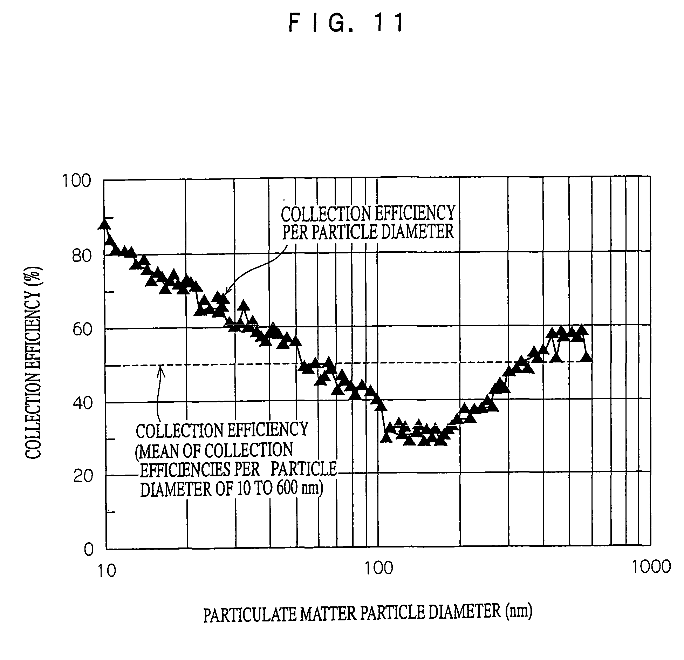

In the graph shown in Fig. 11, the curve plotted by the ▲ marks in the drawing shows the changes in the collection efficiency per particle diameter, with respect to the particle diameter of the particulate matter. The dashed straight line shows the mean value of the collection efficiency per particle diameter for particle diameters of 10 nm to 600 nm of the particulate matter. Note that, in the following explanation, when the collection efficiency is not particularly being described on a per-diameter basis, it means the mean value of the collection efficiency per particle diameter for particle diameters of 10 nm to 600 nm.

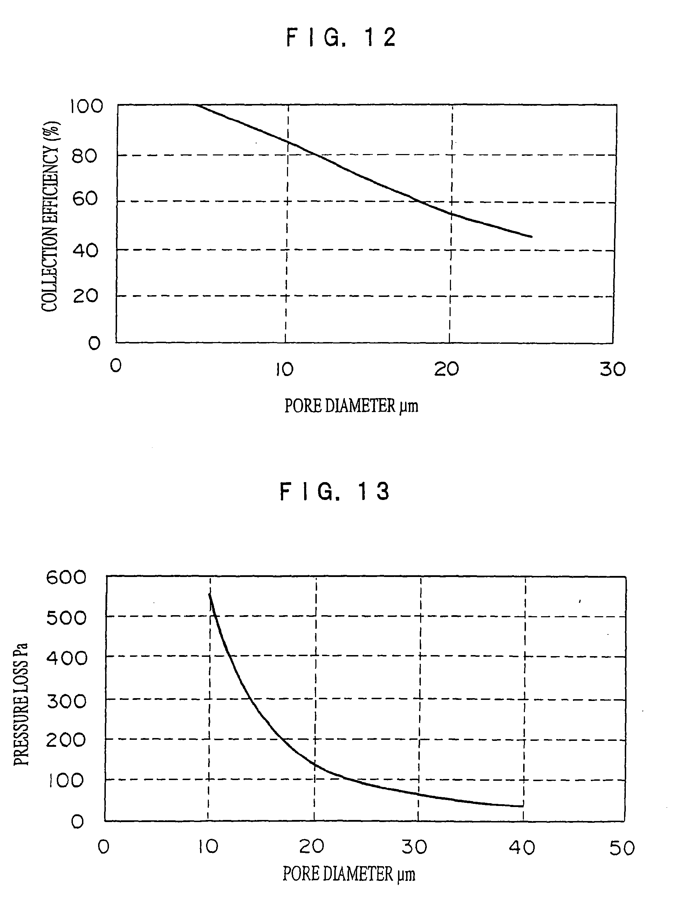

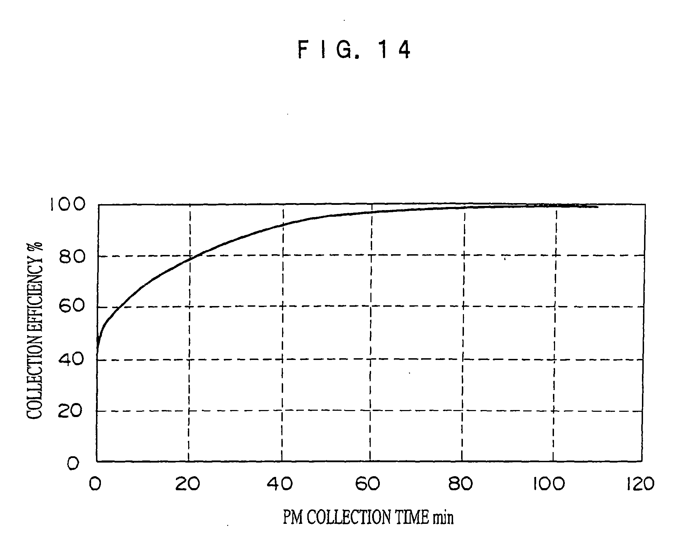

The graphs of Fig. 12 and Fig. 13 show differences in the collection efficiency and the pressure drop of the exhaust gas filter, respectively, in accordance with differences in the pore diameter. Further, the graph of Fig. 14 shows changes in the performance over time of the collection efficiency of an exhaust gas filter having a certain pore diameter.

Note that the absolute values shown in the graphs of Figs. 11 through 14 are examples and may shift in any direction due to the structure of the exhaust gas processing device. However, the trends in the changes which are shown in these graphs are generally the same regardless of the structure of the exhaust gas processing device.

As can be understood from Fig. 11, there is particle diameter dependence in which, as the particle diameter of the particulate matter increases, the collection efficiency per particle diameter changes in a gentle V-shape. Further, as can be understood from Figs. 12 and 13, although an increase in the pore diameter generally brings about a decrease in the efficiency of collecting the particulate matter, the pressure drop can be lowered, and there is a trade-off between collection efficiency and pressure drop. Moreover, as can be understood from Fig. 14, when the exhaust gas is processed, there is the trend that the particulate matter collection efficiency in initially low, but gradually increases, and finally is saturated.

The structure of a conventional exhaust gas processing device and a summary of the characteristics thereof have been described above by using concrete examples and the drawings. In such exhaust gas processing devices, catalysts are often used in order to render harmless the harmful gas components in the exhaust gas. However, the particulate matter contained in the exhaust gas functions as a catalyst poison, and lowers the activity of the catalysts which purify the NOx, CO, HC, and the like. Therefore, various exhaust gas filters for collecting this particulate matter have been proposed (see, for example, Japanese Patent Application Laid-Open (JP-A) No. 8-931).

In addition to the function of collecting the particulate matter, a low pressure drop, high compressive strength, high thermal shock resistance, and the like are generally demanded of exhaust gas filters. Moreover, in order for the particulate matter to accumulate at the exhaust gas filter when collection of the particulate matter is carried out, the exhaust gas filter must be regenerated intermittently. In this case, it is important that the regeneration efficiency of the exhaust gas filter is excellent. This is because, if the regeneration efficiency of the exhaust gas filter is poor, the pressure drop rises due to use over a long period of time.

In order to overcome the above-described problems, there has been proposed an exhaust gas filter in which a filter layer, which has a pore diameter which is smaller than that of a filter base body, is provided on the surface of the filter base body whose mean pore diameter is 10 to 100 µm (see JP-A No. 3-47507). When this exhaust gas filter is used, even if regeneration processing is carried out repeatedly, it is possible to prevent the pressure drop from rising.

However, when this exhaust gas filter is used in a state of not having been used before, or when this exhaust gas filter is subjected to regeneration processing and is used again, in the same way as in conventional exhaust gas processing devices, the pressure drop and the collection efficiency increase a certain extent over time, although they are finally saturated. Therefore, there is the problem that this exhaust gas filter also cannot exhibit stable characteristics as time passes from the initial use.

### SUMMARY OF THE INVENTION

The present invention was achieved in consideration of the above-described problems. The present invention provides an exhaust gas filter in which the collection efficiency can be maintained high from the initial use thereof and in which there is little change in the pressure drop, and provides a method of manufacturing the exhaust gas filter and an exhaust gas processing device.

The present inventors further earnestly examined problems with conventional exhaust gas filters.

As discussed previously, in a conventional exhaust gas filter, there is a trade-off between collection efficiency and pressure drop, with respect to the pore diameter. Therefore, it is difficult to achieve high levels of both. In addition, when the regeneration efficiency of the exhaust gas filter is poor, there is the problem that the pressure drop rises due to use over a long period of time. To address these problems, as disclosed in JP-A No. 3-47507, it is effective to use an exhaust gas filter in which, on the surface of a filter base body (a primary structure), there is provided a filter layer (a secondary structure) having a pore diameter which is smaller than the pore diameter of the filter base body.

However, even in an exhaust gas filter having such a secondary structure, the pore diameter of the secondary structure is large, and the secondary structure is thick. Therefore, it is not possible to overcome the problems of changes in performance over time, which are the problems that the collection efficiency during initial use is low and the increase in the pressure drop until the collection performance stabilizes is great.

The present inventors made observations after the flow-in side surface of a conventional gas filter, which did not have a secondary structure, was used for a sufficient period of time until the collection efficiency was saturated (reached 100%), and confirmed that a secondary structure, which was formed from a fibrous layer having a pore diameter smaller than the pore diameter of the filter base body, formed at that exhaust gas filter. Further, the present inventors confirmed that such a secondary structure disappeared due to the regeneration processing (heating processing), and formed again when processing of exhaust gas was carried out.

From these facts, the present inventors inferred that the following are features of the secondary structure which is formed accompanying exhaust gas processing and which disappears due to regeneration processing: (1) the secondary structure is formed naturally due to the accumulation of sooty components and the like within the exhaust gas; (2) this formation and disappearance of the secondary structure brings about changes in performance over time; and (3) once this secondary structure is sufficiently formed, the collection efficiency is saturated and the rate of increase in the pressure drop decreases, i.e., the performance stabilizes. Accordingly, the present inventors thought that it is necessary to provide a secondary structure having a different pore diameter and the like than the filter base body.

However, as disclosed in JP-A No. 3-47507, even if a filter layer is artificially provided as the secondary structure, because the pore diameter is large, changes in the performance over time arise. The mean pore diameter of this filter layer is within the range of 0.2 µm to 10 µm. Further, this artificial filter layer is formed through a process in which porous particles of diatomaceous earth or alumina or the like whose particle diameter is about 3.6 µm to 20 µm for example, are rubbed-into the surface of the filter base body. Therefore, it is assumed that the thickness of the filter layer is about from several µm to several tens of µm. On the other hand, the secondary structure, which the present inventors observed and which forms naturally by the accumulation of sooty components or the like, has a mean pore diameter of about 100 nm and a thickness of about 1 µm, and differs greatly from the above-described filter layer with regard to the pore diameter and the thickness.

This suggests that changes in performance over time cannot be suppressed merely by providing a secondary structure, and that there are the most appropriate pore diameter and thickness of the secondary structure.

On the basis of the above-described knowledge, the present inventors thought that it was important to form, at the filter base body, a secondary structure which can exhibit functions which are equivalent to those of a secondary structure formed naturally by the accumulation of sooty components or the like accompanying exhaust gas processing, and which does not disappear even due to regeneration processing, and the present inventors came to achieve the present invention as follows. Namely, a first aspect of the present invention discloses: an exhaust gas filter including a filter base body which has many pores and has a flow-in surface, in which exhaust gas containing particulate matter flows, and an exhaust surface, from which purified gas is exhausted, the exhaust gas filter having at least a function of removing the particulate matter from the exhaust gas by passing the exhaust gas through the filter base body from the flow-in surface toward the exhaust surface, wherein a micropore structure, in which agglomerates of particulates having fine gaps are connectedly provided and which is air-permeable and which collects the particulate matter contained in the exhaust gas, is provided at the filter base body at a surface and/or within the pores which open and communicate the flow-in surface and the exhaust surface to and with one another.

Further, a second aspect of the present invention discloses: an exhaust gas filter including a filter base body having many pores and having a flow-in surface, in which exhaust gas containing particulate matter flows, and an exhaust surface which exhausts purified gas, the exhaust gas filter having at least the function of removing the particulate matter from the exhaust gas by making the exhaust gas pass through the filter base body from the flow-in surface toward the exhaust surface, where a micropore structure, which has a thickness of 3.5 µm or less and a mean pore diameter of within a range of 20 nm to 200 nm, is provided within and/or at the surface of the filter base body so as to intersect a direction of passage of the exhaust gas..

In addition, the present invention discloses a method of manufacturing the exhaust gas filter according to the first aspect of the present invention, the method comprising: a micropore structure precursor forming step of forming a micropore structure precursor by adhering/accumulating heat-resistant particulates in a vicinity of the exhaust surface by sucking-in a gas, in which the heat-resistant particulates are dispersed, from the exhaust surface and exhausting the gas toward the flow-in surface; and a sintering step of forming the micropore structure by sintering the micropore structure precursor by heating the micropore structure precursor.

The present invention discloses a method of manufacturing the exhaust gas filter according to the second aspect of the present invention, the method comprising: a micropore structure precursor forming step of forming a micropore structure precursor by adhering/accumulating heat-resistant particulates in a vicinity of the exhaust surface by sucking-in a gas, in which the heat-resistant particulates are dispersed, from the exhaust surface and exhausting the gas toward the flow-in surface; and a sintering step of forming the micropore structure by sintering the micropore structure precursor by heating the micropore structure precursor.

Moreover, the present invention discloses an exhaust gas processing device having the exhaust gas filter according to the first aspect of the present invention, wherein the exhaust gas processing device has at least a flow-in port, an exhaust port, a gas flow path connecting the flow-in port and the exhaust port, and a partitioning wall which divides the gas flow path into a flow-in port side and an exhaust port side.

In addition, the present invention discloses an exhaust gas processing device having the exhaust gas filter according to the second aspect of the present invention, wherein the exhaust gas processing device has at least a flow-in port, an exhaust port, a gas flow path connecting the flow-in port and the exhaust port, and a partitioning wall which divides the gas flow path into a flow-in port side and an exhaust port side.

Particularly preferable aspects of the present invention will be described as examples hereinafter, but the present invention is not limited to these aspects:
the exhaust gas filter according to the first aspect of the present invention, wherein a porosity of the micropore structure is within a range of 60 to 90%;
the exhaust gas filter according to the first aspect of the present invention, wherein the micropore structure is fibrous;
the exhaust gas filter according to the first aspect of the present invention, wherein the micropore structure contains a material which has heat-resistance and/or a function of oxidizing the particulate matter, and which can be made into particulates of a particle diameter of about 10 nm to 200 nm;
the exhaust gas filter according to the first aspect of the present invention, wherein the micropore structure is provided in a vicinity of the exhaust surface;
the exhaust gas filter according to the first aspect of the present invention, wherein a mean pore diameter of the filter base body is within a range of 5 µm to 50 µm;
the exhaust gas filter according to the first aspect of the present invention, wherein a catalyst, which has a function of oxidizing the particulate matter, is carried on surfaces of walls of the pores of the filter base body;
the exhaust gas filter according to the second aspect of the present invention, wherein a porosity of the micropore structure is within a range of 60 to 90%;
the exhaust gas filter according to the second aspect of the present invention, wherein the micropore structure is fibrous;
the exhaust gas filter according to the second aspect of the present invention, wherein the micropore structure contains a material which has heat-resistance and/or a function of oxidizing the particulate matter, and which can be made into particulates of a particle diameter of about 10 nm to 200 nm;
the exhaust gas filter according to the second aspect of the present invention, wherein the micropore structure is provided in a vicinity of the exhaust surface;
the exhaust gas filter according to the second aspect of the present invention, wherein a mean pore diameter of the filter base body is within a range of 5 µm to 50 µm;
the exhaust gas filter according to the second aspect of the present invention, wherein a catalyst, which has a function of oxidizing the particulate matter, is carried on surfaces of walls of the pores of the filter base body.

### BRIEF DESCRIPTION OF THE DRAWINGS

Preferable embodiments of the invention will be described in detail based on the following figures.

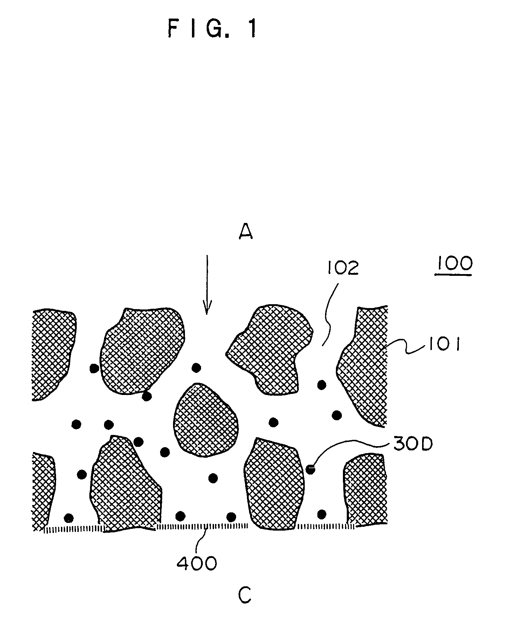

Fig. 1 is a schematic sectional view showing a structural example of an exhaust gas filter of the present invention (a schematic sectional view in which is enlarged a portion of a partitioning wall (exhaust gas filter) which is shown in Fig. 9 and at which a micropore structure is provided).

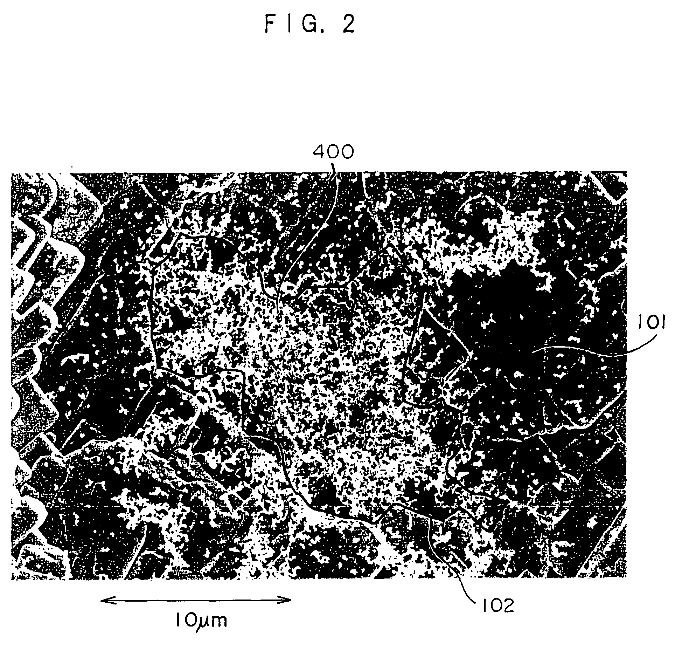

Fig. 2 is an enlarged photograph of a surface of the micropore structure, in which an exhaust surface of the exhaust gas filter shown in Fig. 1 is observed by a scanning electron microscope.

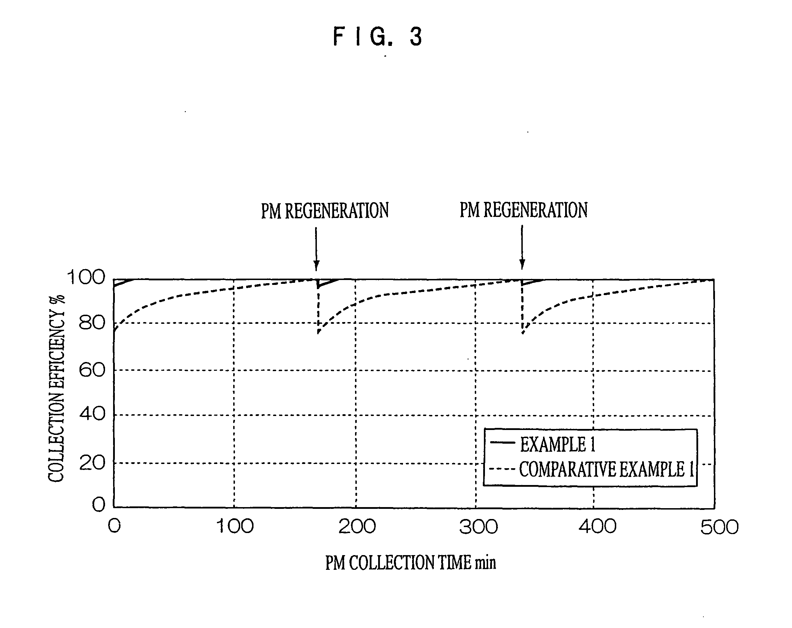

Fig. 3 is a graph showing changes in collection efficiency with respect to PM collection time in an exhaust gas processing device of the present invention (Example 1 which will be described later) and a conventional exhaust gas processing device (Comparative Example 1 which will be described later).

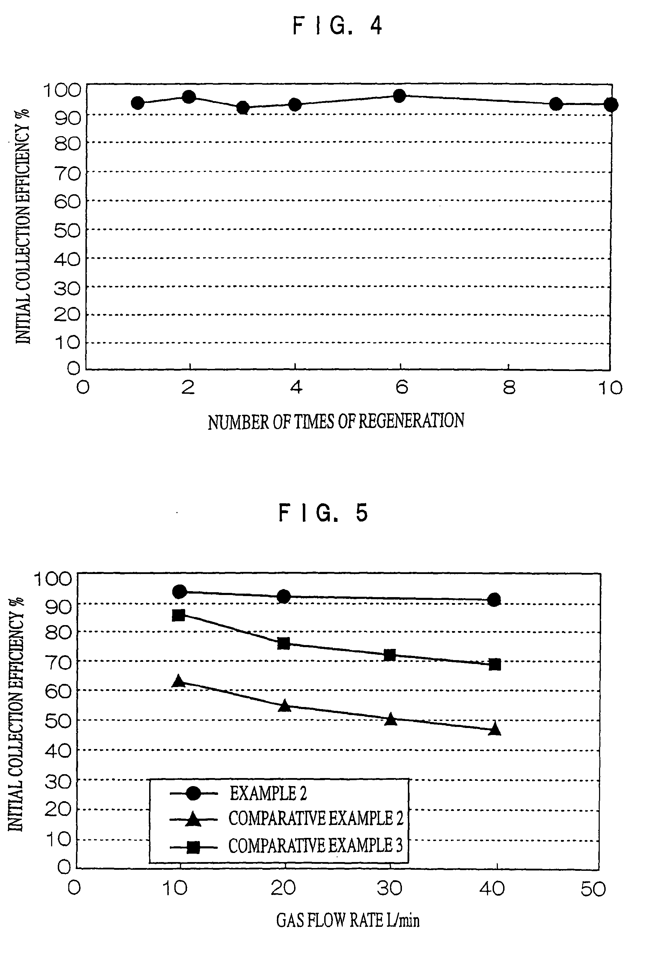

Fig. 4 is a graph showing changes in an initial collection efficiency with respect to the number of times of regeneration at an exhaust gas flow rate of 10 L/min in an exhaust gas processing device of the present invention (Example 2 which will be described later).
Fig. 5 is a graph showing the relationship between the initial collection efficiency and the exhaust gas flow rate in the exhaust gas processing device of the present invention (Example 2 which will be described later) and conventional exhaust gas processing devices (Comparative Examples 2 and 3 which will be described later).

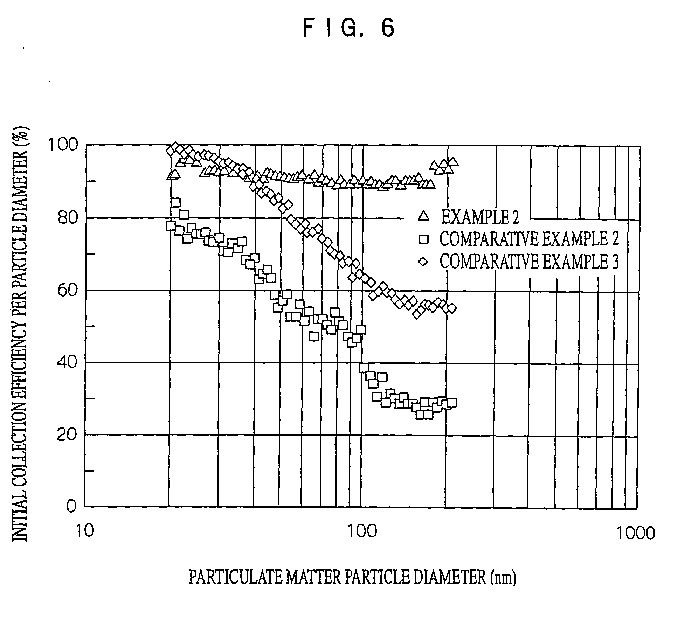

Fig. 6 is a graph showing initial collection efficiency per particle diameter of particulate matter at the time of an exhaust gas flow rate of 40 L/min in the exhaust gas processing device of the present invention (Example 2 which will be described later) and the conventional exhaust gas processing devices (Comparative Examples 2 and 3 which will be described later).

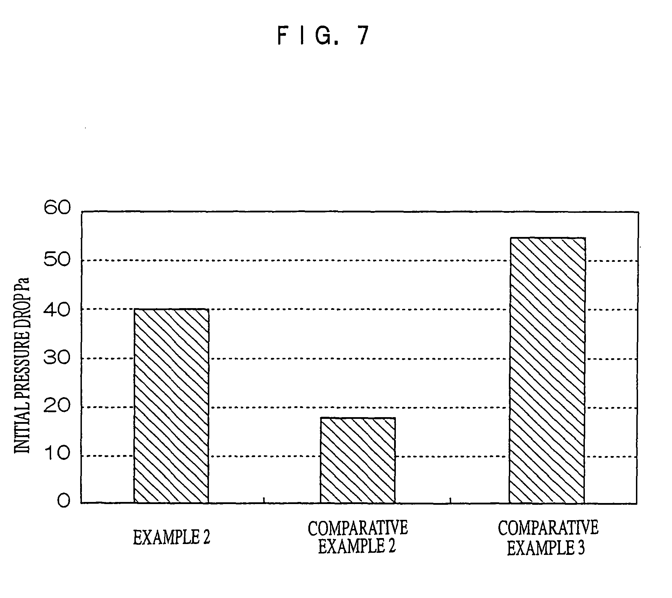

Fig. 7 is a graph showing results of measurement of initial pressure drop at the time of an exhaust gas flow rate of 10 L/min in the exhaust gas processing device of the present invention (Example 2 which will be described later) and the conventional exhaust gas processing devices (Comparative Examples 2 and 3 which will be described later).
Fig. 8 is a schematic perspective view, portions of which are in cross-section, showing an example of an exhaust gas processing device.
Fig. 9 is a schematic sectional view showing a partitioning wall structure of the exhaust gas processing device shown in Fig. 8.
Fig. 10 is a schematic sectional view in which a portion of a partitioning wall (an exhaust gas filter) shown in Fig. 9 is illustrated in an enlarged manner.
Fig. 11 is a graph showing definitions of collection efficiency and collection efficiency per particle diameter of particulate matter.
Fig. 12 is a graph showing changes in collection efficiency with respect to pore diameter.
Fig. 13 is a graph showing changes in pressure drop with respect to pore diameter.
Fig. 14 is a graph showing changes in collection efficiency with respect to exhaust gas processing time from the start.

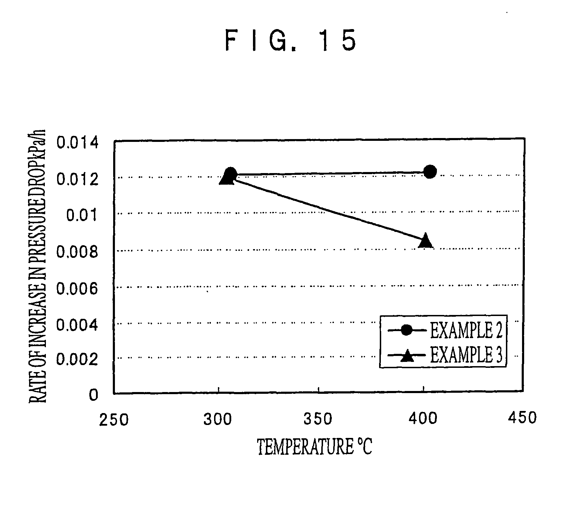

Fig. 15 is a graph showing the measurement results of a rate of increase in pressure drop after flowing the exhaust gas for 90 minutes with respect to the temperatures of the exhaust gas in the exhaust gas processing devices of Examples 2 and 3, which will be described hereinafter.

### DETAILED DESCRIPTION OF THE INVENTION

### Exhaust Gas Filter and Method of Manufacture Thereof

An exhaust gas filter of a first aspect of the present invention includes a filter base body having many pores and having a flow-in surface, in which exhaust gas containing particulate matter flows, and an exhaust surface which exhausts purified gas, the exhaust gas filter having at least the function of removing the particulate matter from the exhaust gas by making the exhaust gas pass through the filter base body from the flow-in surface toward the exhaust surface, where a micropore structure, in which aggregates of particulates having extremely small gaps are connectedly provided and which is air permeable and which collects the particulate matter contained in the exhaust gas, is provided at the filter base body at the surface and/or within pores which open and communicate the flow-in surface and the exhaust surface to and with one another.

An exhaust gas filter of a second aspect of the present invention includes a filter base body having many pores and having a flow-in surface, in which exhaust gas containing particulate matter flows, and an exhaust surface which exhausts purified gas, the exhaust gas filter having at least the function of removing the particulate matter from the exhaust gas by making the exhaust gas pass through the filter base body from the flow-in surface toward the exhaust surface, where a micropore structure, which has a thickness of 3.5 µm or less and a mean pore diameter of within a range of 20 nm to 200 nm, is provided within and/or at the surface of the filter base body so as to intersect a direction of passage of the exhaust gas.

Accordingly, in accordance with an exhaust gas processing device using the exhaust gas filter of the present invention, when exhaust gas is processed, high collection efficiency can be maintained from initial use, changes in pressure drop can be suppressed, and stable performance over time can be exhibited.

Fig. 1 is a schematic sectional view of an exhaust gas filter in which the above-described micropore structure is provided at the exhaust surface of the filter base body of the exhaust gas filter shown in Fig. 10 (i.e., is a structural example of the exhaust gas filter of the present invention). In Fig. 1, reference numeral 400 denotes the micropore structure, and the portions designated by the other reference numerals are the same as those shown in Fig. 10.

In the exhaust gas filter shown in Fig. 1, when the exhaust gas passes through the partitioning wall 100, the particulate matter 300 adheres to and is collected at the surfaces of the filter base body structural portion 101. Further, in the exhaust gas filter shown in Fig. 1, the particulate matter 300, which conventionally passes through without being collected, can adhere to and be collected by the micropore structure 400 provided at the exhaust surface.

Fig. 2 is an enlarged photograph showing an example of the surface of the micropore structure, in which the exhaust surface of the exhaust gas filter shown in Fig. 1, at which surface the micropore structure 400 is provided, is observed by a scanning electron microscope. In Fig. 2, the region enclosed by the black frame line is the pore 102, and the regions outside of the frame of this region are the filter base body structural portion 101. Further, the micropore structure 400 is formed so as to cover the pores 102.

The positions of the flow-in surface and the exhaust surface provided at the surfaces of the exhaust gas filter are not particularly limited. For example, in a case in which the exhaust gas flows along an "L" shape through an exhaust gas filter which is worked into the shape of the letter "L", the flow-in surface and the exhaust surface are orthogonal to one another. However, usually, it is preferable that the flow-in surface and the exhaust surface are provided parallel. In this case, it is preferable to provide the flow-in surface at one surface and the exhaust surface at the other surface, with the filter base body disposed therebetween. In the following description, for convenience of explanation, use of such a structure is assumed. However, the positional relationship between the flow-in surface and the exhaust surface provided at the surfaces of the exhaust gas filter are not necessarily limited to being only parallel.

### Micropore Structure

Next, the micropore structure, which is provided at the filter base body of the exhaust gas filter of the present invention, will be described in detail.

As described above, the thickness of the micropore structure is 3.5 µm or less, and is preferably 2 µm or less. The thickness of the micropore structure exceeding 5 µm leads to an increase in the absolute pressure drop, and to an increase in the pressure drop over time which accompanies the usage time.

From the standpoint of the pressure drop, thinner thicknesses of the micropore structure are preferable. However, if the micropore structure is too thin, the particulate matter collection efficiency itself decreases, and there are cases in which the exhaust gas cannot be purified sufficiently. Accordingly, it is preferable that the thickness of the micropore structure is 0.2 µm or more, and 0.5 µm or more is more preferable. Note that the thickness of the micropore structure can be easily measured by using a scanning electron microscope or the like.

It suffices for the micropore structure to be formed in the form of a layer, so as to at least close the pores of the filter base body. Accordingly, in the present invention, the aforementioned "thickness of the micropore structure" means the thickness, in the direction of passage of the exhaust gas, of the micropore structure which is formed so as to close the pores of the filter base body. Here, "the direction of passage of the exhaust gas" means the macro flowing direction of the exhaust gas which passes through the exhaust gas filter. For example, if the micropore structure is provided in a vicinity of the exhaust surface of the filter base body, "the direction of passage of the exhaust gas" means the direction orthogonal to the exhaust surface. Further, if the micropore structure is provided at the surface of the filter base body, the thickness of the micropore structure which is not formed at a position closing the pores is not particularly limited, and it suffices to not provide the micropore structure at positions of the filter base body surface where the pores do not exist.

As described above, the mean micropore diameter of the micropore structure is within the range of 20 nm to 200 nm, and is preferably within the range of 20 nm to 150 nm, and is more preferably within the range of 20 nm to 100 nm.

If the mean micropore diameter exceeds 1000 nm, the particulate matter collection efficiency itself decreases, and the exhaust gas cannot be purified sufficiently. Further, the mean pore diameter being less than 10 nm leads to an increase in the absolute pressure drop, and to an increase in the pressure drop over time which accompanies the usage time.

Note that the mean micropore diameter of the micropore structure can be measured by image analysis using an image photographed by a scanning electron microscope, or by using a mercury-intrusion-porosimeter.

The micropore structure having the thickness and mean pore diameter described above, exhibits effects which are basically similar with regard to collection efficiency and pressure drop, as a secondary structure which is formed naturally by the accumulation of sooty components or the like due to the processing of the exhaust gas.

Note that, although the porosity of the micropore structure is not particularly limited, it is preferably within the range of 60% to 90%, and more preferably within the range of 80% to 90%. If the porosity exceeds 90%, there are cases in which the micropore structure lacks mechanical durability even of the extent of maintaining the shape of the micropore structure, and the collection efficiency decreases because the surface area per unit volume is small. Further, if the porosity is less than 50%, there are cases in which the pressure drop is great.

Note that the porosity of the micropore structure can be determined by using image analysis using an image photographed by a scanning electron microscope.

The micropore structure is typically formed in the shape of a layer, but is not limited to such a form, and may be a form which is formed by primary particles accumulating so as to have a proper amount of voids. Concrete examples of a form which is formed by using such an accumulating process are, for example, a fibrous form in which fine fibers such as columnar crystals accumulate, and a form which is formed by spherical or flake-shaped particulates accumulating. This also includes a porous form obtained by removing, in the shape of being eaten away vermicularly, portions of a bulk-shaped layer which is formed once.

On the other hand, the material structuring the micropore structure must at least not disappear, decompose, or modify/deteriorate due to regeneration processing, and not lead to deformation of the structure itself of the micropore structure. From this standpoint, the material structuring the micropore structure is preferably at least heat-resistant at 500°C or higher. Further, if the exhaust gas filter does not carry a noble metal catalyst (is an exhaust gas filter without catalysts), the material structuring the micropore structure is preferably heat-resistant at 700°C or higher. Further, from the standpoint of suppressing an increase in the pressure drop accompanying the collection of the particulate matter, the material which structures the micropore structure preferably has the function of oxidizing the particulate matter.

The material structuring the micropore structure can be appropriately selected from among known inorganic materials, i.e., ceramic/glass materials such as crystalline and/or amorphous metal oxides, metal nitrides or the like, and metal materials which are slightly oxidizable or non-oxidizable. Among these materials, in the present invention, it is preferable to use an inorganic material selected from silica compounds, titiania compounds, zirconia compounds, alumina compounds, and ceria compounds, from the standpoint that it is preferable to have at least one of heat-resistance and the function of oxidizing the particulate matter. A single one of these inorganic materials can be used, or two or more can be used in combination. Further, in order to impart, to the micropore structure, the functions of a ternary catalyst, an NOx occluding (or adsorbing) reduction catalyst, and the like, the micropore structure can be made to include or to carry a noble metal such as platinum, rhodium, palladium, or the like; a transition metal such as iron, nickel, cobalt, or the like; an alkali metal such as sodium, potassium, or the like; and/or an alkali earth metal such as magnesium, calcium, barium, or the like.

If the exhaust gas filter carries a catalyst, it is preferable to use a noble metal material such as platinum, rhodium, palladium, or the like, in order to promote the oxidation of the particulate matter. A single one of these noble metal materials can be used, or two or more can be used in combination.

The micropore structure can be provided within the pores of the filter base body and/or at the surface, so as to intersect the direction of passage of the exhaust gas. In particular, it is preferable to provide the micropore structure in the vicinity of the exhaust surface. In a case in which the micropore structure is provided in a vicinity of the exhaust surface, in particular when the exhaust gas filter is a type with a catalyst, the particulate matter accumulates on the micropore structure it is possible to prevent a reduction in the particulate matter which contacts the catalyst within the filter base body. Therefore, combustion of the collected particulate matter can be carried out efficiently.

Note that the micropore structure provided in a vicinity of the exhaust surface may be provided so as to cover the entire exhaust surface side of the filter base body, or may be provided in a form closing only the pore interiors facing the exhaust surface side of the filter base body, or may be provided in a form including both.

### Methods of Forming Micropore Structure

Next, methods of forming the micropore structure will be described. The methods of forming the micropore structure can be broadly classified into the following (1) through (3) for example: (1) a method of forming the micropore structural skeleton by accumulating particulates or a raw material forming the molecule-shaped micropore structure skeleton (hereinafter called "first accumulating forming method", (2) a method of forming the micropore structure by accumulating a porous body or particles having in advance a void structure of a proper degree (hereinafter called "second accumulating forming method", and (3) a method of forming the micropore structure by, after once forming a bulk-shaped film (layer), selectively removing a portion of the matrix forming the film so as to form vermicular holes (hereinafter called "selective removal method"). Two or more methods selected from among the above-described (1) through (3) may be combined as needed.

Among these methods (1) through (3), using the first accumulating forming method is most preferable from the standpoints of the ability to control the morphological characteristics such as thickness, mean pore diameter, and the like which are required of the micropore structure of the exhaust gas filter of the present invention, the ease of forming the micropore structure, and the like.

Hereinafter, these methods (1) through (3) will be described in further detail, with explanation centering around the first accumulating forming method.

The first accumulating forming method is a method of forming the micropore structure by accumulating particulates or a component which forms a molecular-shaped micropore structure skeleton. In this case, for example, the following method can be used:
a gas, in which particulates are dispersed, is made to pass through the filter base body, and
by accumulating the particulates at desired regions of the filter base body, a micropore structure precursor is formed, and then this micropore structure precursor is heated and
sintered such that the micropore structure is formed.

In particular, when the micropore structure is to be formed in a vicinity of the exhaust surface, the above-described first accumulating forming method is preferable as it includes the following two steps. Namely, it is preferable to include at least: a micropore structure precursor forming step of forming a micropore structure precursor by adhering/accumulating particulates in a vicinity of the exhaust surface by sucking-in gas, in which particulates are dispersed, from the exhaust surface and exhausting the gas toward the flow-in surface; and a sintering step of sintering the micropore structure precursor by heating the micropore structure precursor, so as to form the micropore structure.

Note that a gas is typically used as the dispersion medium of the particulates, but a liquid may be used together therewith. For example, ultrasonic waves may be applied to a solution, in which particulates are dispersed by using a surfactant or the like, so as to form a mist, and this mist can be atomized on the surface of the filter base body so as to accumulate the particulates.

The size of the particulates which are used is not particularly limited, but particulates whose particle diameter is within a range of about 10 nm to 200 nm are preferable. Examples of the shape of the particulates include spherical, amorphous, flake-shaped, needle-shaped, columnar, and the like, but are not limited to these.

The material of the particulates is not particularly limited provided that it exhibits the above-described heat-resistance and mechanical durability, as well as adhesion / a tendency to stick to the filter base body, when the micropore structure is finally formed. However, the material is preferably a ceramic material such as a silica ceramic material, a titania ceramic material, an alumina ceramic material, or the like (or a ceramic precursor material such as an organic-inorganic hybrid material such as hydrates or carbonates).

The surfaces of the particulates may be subjected to a surface treatment by a resin, a silane coupling agent, a surfactant, or the like in order to ensure the dispersability of the particulates within the gas, suppress formation of coarse particles due to aggregation of the particulates with one another within the pores of the filter base body at the time of forming the micropore structure precursor, or ensure adhesiveness between the particulates and/or between the particulates and the pore wall surfaces of the filter base body in the sintering process, or the like.

Further, other than the above-described method using the process of dispersing, in a gas, particulates which are formed in advance from a raw material structuring the micropore structure, and accumulating the particulates on the surface of or in the pores of the filter base body, a conventional particulate fabricating method can be used as the first accumulating method.

Among such particulate fabricating methods, it is preferable to use a method of vaporizing the raw material or making the raw material component into a mist. Examples of such methods include: an evaporating/aggregating method in which, after the raw material is vaporized at a high temperature, sudden cooling is carried out under reduced pressure and the vapor is aggregated in the form of particulates; a chemical reaction method in which the particulates are formed by using a chemical reaction, at a high temperature, of a metal compound vapor; an atomizing/drying method in which a solution of a metal salt is atomized in hot air and the liquid drops are dried rapidly; and a method of moving molecular-shaped raw material components into a gaseous phase and depositing/accumulating them on a solid surface as particulates such as an atomizing/thermally decomposing method in which, by high-temperature-processing liquid drops, which are formed by atomizing a solution of a metal salt, removal of the solvent components and thermal decomposition of the metal salt are carried out simultaneously and the particulates are obtained.

A case in which an atomizing / thermally decomposing method is used will be described as an example of the first accumulating method using such a method.

First, a solvent containing a raw material of a glass material or a ceramic such as a metal alkoxide is made into a mist by using the application of ultrasonic waves or the like. This solution in mist form is made to penetrate through the filter base body surface and/or the pore interiors in the vicinity of the surface of the filter base body, and the mist is made to adhere to the surfaces of the inner walls of the pores. Next, by carrying out heating so as to remove the solvent component of the mist which has adhered to the surfaces of the inner walls of the pores or thermally decompose the raw material component, the micropore structure can be formed. Or, at the point in time when the mist is near to the surface of the filter base body, the components contained in the mist may be made into particulates by heating at a high temperature so as to remove the solvent component or thermally decompose the raw material component, and these particulates made to accumulate in a vicinity of the surface of the filter base body. In this case, in order to further strengthen the skeleton of the micropore structure, a heat treatment may be carried out again after accumulation of the particulates.

On the other hand, the second accumulating forming method is a method of forming the micropore structure by accumulating a porous body or particles which have, in advance, a void structure of a proper degree. In this case, because the particles themselves have a void structure, the size of the particles is large to a certain extent. However, because it is at least necessary for the particle diameter of these particles to be 1 µm or less, the size of the particles is preferably about several tens to several hundreds of nm.

In the second accumulating forming method, in the same way as in the first accumulating method, the micropore structure may be formed by dispersing particles in a gas and accumulating and sintering the particles at desired positions of the filter base body. Further, in a case in which the weight of the particles themselves is heavy and it is difficult to disperse the particles in a gas, the micropore structure may be formed by a process such as directly rubbing the particles into the surface of the filter base body, or applying the particles, which are dispersed in a solvent, to the surface of the filter base body, or the like.

Note that, in the second accumulating forming method, it is possible to use a porous body or particles having, in advance, a void structure of a proper degree. Particles of a particle diameter of about 0.1 µm which are formed of a porous body and are obtained by pulverizing a bulk-shaped porous body fabricated by using a known method, can be used as these particles. Note that, when grinding a bulk-shaped porous body, it is difficult to pulverize to a size of about 0.1 µm by using a general dry-type grinding method, even if a classifying operation is used in combination therewith. Rather, an in-liquid grinding method, which is suited to pulverizing solid materials, is preferably used.

Other than a method of grinding a bulk-shaped porous body, it is also possible to use particulates or the like having a hollow structure which are formed by using a known particulate fabricating method such as the above-described atomizing / thermal decomposing method or the like. Such particulates having a hollow structure are incomplete, such as the shell of the particulate is missing locally or a portion of the shell is easily destroyed at the time of accumulation. However, particulates having a hollow structure are preferable because it is easy to form the pores of the micropore structure so as to communicate.

In the same way as the particulates used in the first accumulating forming method, the surfaces of the particles used in the second accumulating forming method may be subjected to a surface treatment by a resin, a silane coupling agent, a surfactant, or the like.

Next, the selective removal method will be described. To summarize, the selective removal method is a method of forming the micropore structure by once forming a bulk-shaped film (layer), and forming vermicular holes by selectively removing portions of the matrix forming this film.

A known porous body forming method can be used as the selective removal method. Examples of such methods include the following: a method of forming a porous body by selectively dissolving only specific components by acid treating a matrix of a material forming separate phases such as borosilicate glass, kaolinite, or the like; and a method of forming a porous body by decomposing and removing organic components by heat-treating a matrix which is formed of a material in which an organic material and an inorganic material are mixed together, or an organic-inorganic hybrid material.

Note that, at the time of forming the bulk-shaped film, it is difficult to use a usual thin-film forming method, because the thickness of the micropore structure which is finally formed is extremely thin relative to the size of the pore diameter of the filter base body. In this case, for example, when liquid phase film formation is utilized, it is preferable to form the film by using a solution which has high viscosity and in which a binder component or the like is added to the raw material component forming the micropore structure skeleton, or it is preferable to use a method of transferring a film, which is formed in a film-shape in advance, onto the surface of the filter base body, or the like.

### Filter Base Body

Next, details of the filter base body will be described. The mean pore diameter of the filter base body is preferably within the range of 5 µm to 50 µm, and is more preferably within the range of 10 µm to 20 µm.

If the mean pore diameter exceeds 50 µm, there are cases in which the particulate matter collection efficiency decreases. On the other hand, if the mean pore diameter is less than 5 µm, there are cases in which the pressure drop increases.

Note that the mean pore diameter of the filter base body can easily be measured by using a mercury-intrusion-porosimeter.

The porosity of the filter base body is preferably within the range of 40% to 70%, and is more preferably within the range of 60% to 70%. If the porosity exceeds 80%, there are cases in which the strength of the filter base body deteriorates. If the porosity is less than 30%, there are cases in which the pressure drop increases.

Note that the porosity of the filter base body can be measured by using a mercury-intrusion-porosimeter.

The shape of the filter base body is not particularly limited, and, for example, can simply be a flat-plate-shape. In this case, the partitioning wall structure of the exhaust gas processing device can be formed by combining pieces of the flat-plate-shaped filter base body which have been cut to predetermined sizes and configurations. However, usually, it is preferable to, from the start, form the partitioning wall structure of the exhaust gas processing device of a single, continuous filter base body by using extrusion molding or the like. In this case, the partitioning wall structure can be made into, for example, the honeycomb structure shown in Figs. 8 and 9.

Ceramic materials which are used as the filter base body material in usual exhaust gas processing devices can be used as the material structuring the filter base body. Examples of such materials include cordierite, mullite, alumina, and silicon carbide.

In order to promote the incinerating of the particulate matter collected at the pore walls, it is preferable that the surfaces of the pores formed from the filter base body within the filter (the pore wall surfaces of the filter base body) carry at least one catalyst selected from oxidation catalysts, ternary catalysts, and NOx occluding (or adsorbing) reduction catalysts.

Concrete examples of catalysts which the pore wall surfaces of the filter base body can be made to carry are noble metals such as platinum, rhodium, palladium, and the like, carrier metals such as cerium, iron, and the like, alkali earth metals such as barium, lithium, potassium, and the like, and alkali metals.

### Exhaust Gas Processing Device

Next, the exhaust gas processing device using the exhaust gas filter of the present invention will be described. The exhaust gas processing device of the present invention has a structure including at least a flow-in port, an exhaust port, a gas flow path connecting the flow-in port and the exhaust port, and a partitioning wall dividing the gas flow path into a flow-in port side and an exhaust port side. Here, the exhaust gas filter of the present invention is at least used as the partitioning wall. In this case, the flow-in surface of the exhaust gas filter is provided at the aforementioned flow-in port side, and the exhaust surface of the exhaust gas filter is provided at the aforementioned exhaust port side.

The structure of the partitioning wall is not particularly limited, but it is usually preferable to form the honeycomb structure such as shown as an example in Figs. 8 and 9, in order to make large the contact surface area of the partitioning wall formed by the exhaust gas filter with respect to the exhaust gas flowing-in from the flow-in port, and make the size of the exhaust gas processing device compact. In this case, the density (cell density) of the pass-through holes (e.g., corresponding to the gas flow paths 200 in Fig. 8), which are provided substantially parallel to the flow-in port - flow-out port direction of the exhaust gas processing device, depends on the application of the exhaust gas processing device, but usually can be in the range of 100 to 300 cells per inch², and the thickness of the partitioning wall can be within the range of 0.3 to 0.5 mm.

The exhaust gas processing device can be applied to the processing of an exhaust gas which contains particulate matter and which is exhausted from an internal combustion engine such as a diesel engine or the like, or any of various combustion/incineration facilities such as factories or the like, or the like. In particular, the exhaust gas processing device is suited to the processing of exhaust gas of a diesel engine installed in an automobile.

Further, because the exhaust gas processing device of the present invention uses the exhaust gas filter of the present invention, the exhaust gas processing device is suited to the processing of exhaust gas which contains particulate matter whose mean particle diameter is preferably in the range of 0.001 to 10 µm, and more preferably in the range of 0.001 to 1 µm.

### EXAMPLES

The present invention will be described in detail hereinafter by Examples. However, the present invention is not limited to only the following Examples.

### Example 1

### Fabrication of Exhaust Gas Processing Device

A filter base body, which was made of cordierite and had the honeycomb structure shown in Fig. 8, a diameter of 30 mm, a length of 50 mm, a cell density of 300 cells per inch², a partitioning wall thickness of 0.3 mm, a porosity of 63%, and a mean pore diameter of 23 µm, was used in fabricating the exhaust gas processing device of Example 1.

Next, this filter base body was wrapped in a cylindrical housing made of stainless steel, and a flow-in port and an exhaust port were provided at the both ends of the housing, and the exhaust gas processing device was fabricated.

Then, dry air, in which alumina particulates of a mean particle diameter of 170 nm were dispersed, was made to flow in from the exhaust port side at a flow rate of 10 L/min, and thereafter, calcination was carried out at 800°C. When the surface of the flow-in surface of the partitioning wall (the filter base body) after the calcination processing was sampled and observed by using a scanning electron microscope, it was found that a micropore structure was formed so as to close the pore entrances of the flow-in surface. Moreover, the mean pore diameter, thickness and porosity of this micropore structure were investigated and found to be 130 nm, 1 µm, and 80%, respectively.

### Evaluation

Next, the exhaust port of the exhaust gas processing device of Example 1, at which the micropore structure was formed at the surface of the flow-in surface of the filter base body as described above, was connected to an exhaust gas supply source, and the micropore structure became the exhaust surface. Thereafter, exhaust gas was supplied at a rate of 10 L/min, and while regeneration processing was carried out every 170 minutes, the collection efficiency was measured, and the pressure drop at the point in time when the collection efficiency was saturated (100%) was measured.

### Exhaust Gas Supply Source and Regeneration Processing Conditions

A combustion particulate generating device, which generated particulate matter of a particle diameter of about 30 to 90 nm, was used as the exhaust gas supply source. Further, the temperature of the exhaust gas exhausted from this exhaust gas supply source was 25°C, and the generated amount of the particulate matter was 0.0167 g/hr.

The regeneration processing was carried out by heating the exhaust gas processing device to 600 to 700°C by a heater.

### Measurement of Collection Efficiency

The concentrations of particulate matter contained in the exhaust gas taken-in to the filter and the exhaust gas exhausted from the filter, respectively, were measured by use of a scanning type mobility particle size analyzing device, and the collection efficiency was computed by the difference between the two.

### Measurement of Pressure Drop

The pressure drop was measured by measuring the pressures at the flow-in port and the exhaust port of the filter by a manometer.

### Comparative Example 1

### Fabrication of Exhaust Gas Processing Device

The filter base body used in fabricating the exhaust gas processing device of Comparative Example 1 was similar to that used in Example 1, and had the honeycomb structure shown in Fig. 8. This filter base body had a diameter of 30 mm, a length of 50 mm, a cell density of 300 cells per inch², a partitioning wall thickness of 0.3 mm, a porosity of 63 %, and a mean pore diameter of 23 µm.

Next, in the same way as in Example 1, this filter base body was wrapped in a cylindrical housing made of stainless steel, and a flow-in port and an exhaust port were provided at the both ends of the housing, and the exhaust gas processing device was fabricated.

### Evaluation

Then, the flow-in port of the obtained exhaust gas processing device of Comparative Example 1 was connected to an exhaust gas supply source, and the same type of evaluations as in Example 1 were carried out.

### Results of Evaluation

The structures of the exhaust gas processing devices of Example 1 and Comparative Example 1 are shown in Table 1, changes in collection efficiency with respect to the PM collection time are shown in Fig. 3, and changes in the collection efficiency (the difference between the maximum collection efficiency (100%) and the minimum collection efficiency) are shown in Table 2.

**TABLE 1**

| | | example 1 | comp. ex. 1 |
|---|---|---|---|
| filter base body | Material | cordierite (MgO•Al₂O₃•₃-SiO₂) | |
| | cell density (cells/inch²) | 300 | 300 |
| | partitioning wall thickness (mm) | 0.3 | 0.3 |
| | porosity (%) | 63 | 63 |
| | mean pore diameter (µm) | 23 | 23 |
| | dimensions (mm) | φ30 × 50 | φ30 × 50 |
| micropore structure | mean pore diameter (µm) | 0.13 | ― |
| | thickness (µm) | 1.0 | |
| | porosity (%) | 80 | |

**TABLE 2**

| | example 1 | comp. ex. 1 |
|---|---|---|
| Difference (%) between maximum collection efficiency (100%) and minimum collection efficiency | 3 | 25 |

As can be understood from Fig. 3 and Table 2, in the exhaust gas processing device of Comparative Example 1, the collection efficiency with respect to the PM collection time increased about 25%, and the collection efficiency fell again to the initial level due to the regeneration processing, and the variation in the collection efficiency over time was extremely large.

On the other hand, it can be understood that, in the exhaust gas processing device of Example 1, the collection efficiency with respect to the PM collection time hardly changed at all with time, and the collection efficiency hardly decreased even though the regeneration processing was carried out, and the variation in the collection efficiency over time was extremely small.

### Example 2 and Example 3

### Fabrication of Exhaust Gas Processing Device

The filter base bodies used in fabricating the exhaust gas processing devices of Example 2 and Example 3 were similar to that used in Example 1, and had the honeycomb structure shown in Fig. 8. The filter base bodies had a diameter of 30 mm, a length of 50 mm, a cell density of 300 cells per inch², a partitioning wall thickness of 0.3 mm, a porosity of 63%, and a mean pore diameter of 23 µm.

Next, the filter base bodies were wrapped in cylindrical housings made of stainless steel, and a flow-in port and an exhaust port were provided at the ends of the housings, and the exhaust gas processing devices were fabricated.

Dry air, in which alumina particulates of a mean particle diameter of 200 nm were dispersed, was made to flow in from the exhaust port side at a flow rate of 10 L/min for about 4 minutes, and thereafter, calcination was carried out at 700°C, so that the exhaust gas processing device of Example 2 was obtained. Dry air, in which ceria-zirconia particulates (CeO₂/ZrO₂ in a molar ratio of 50/50) of a mean particle diameter of 200 nm were dispersed, was made to flow in from the exhaust port side at a flow rate of 10 L/min for about 4 minutes, and thereafter, calcination was carried out at 700°C, so that the exhaust gas processing device of Example 3 was obtained.

In the exhaust gas processing device of Example 2, when the surface of the flow-in surface of the partitioning wall (the filter base body) after the calcination processing was sampled and observed by using a scanning electron microscope, it was found that a micropore structure was formed so as to close the pore entrances of the flow-in surface. Moreover, the mean pore diameter, thickness and porosity of this micropore structure were investigated and found to be 150 nm, 1 µm, and 90%, respectively. Further, when the same type of observation was carried out with respect to the exhaust gas processing device of Example 3, it was found that a micropore structure was formed so as to close the pore entrances of the flow-in surface. The mean pore diameter, thickness and porosity of this micropore structure were 150 nm, 1 µm, and 90%, respectively.

Note that the alumina particulates used in the formation of the micropore structure in Example 2 were prepared by atomizing and combusting, in a gas burner, a solution containing aluminum ions (aluminum ion concentration = 0.5 mol/L). The ceria-zirconia particulates used in the formation of the micropore structure in Example 3 were prepared by atomizing and combusting, in a gas burner, a solution containing cerium and zirconium ions (cerium ion concentration = 0.5 mol/L, zirconium ion concentration = 0.5 mol/L). In this process, oxide particulates were generated by turning the metal element into gas once in a flame, and condensing and oxidizing from this gas phase. As a result, the oxide particulates formed chain-shaped or clustered aggregates of a submicron mean particle diameter, which are typical of vapor phase synthesized particles. Therefore, the desired micropore structure could be easily obtained.

### Evaluation

Next, the exhaust port of the exhaust gas processing device of Example 2, at which the micropore structure was formed at the surface of the flow-in surface of the filter base body as described above, was connected to an exhaust gas supply source in the same way as in Example 1, and the micropore structure became the exhaust surface.

Then, exhaust gas was supplied at a rate of 10 L/min, and the change in the initial collection efficiency immediately after regeneration heating at the time when regeneration processing of 10 minutes and 700°C was carried out 10 times, the initial collection efficiency in cases in which the exhaust gas flow rate was changed to 10, 20, 30, and 40 L/min, the initial collection efficiency per particle diameter of the particulate matter when the exhaust gas flow rate was 40 L/min, and the initial pressure drop when the exhaust gas flow rate was 10 L/min, were measured. Note that exhaust gas at room temperature was used in all of these evaluations.

The changes in the initial collection efficiency with respect to the number of times of regeneration at an exhaust gas flow rate of 10 L/min are shown in Fig. 4. The relationship between the exhaust gas flow rate and the initial collection efficiency is shown in Fig. 5. The initial collection efficiency per particle diameter of the particulate matter at an exhaust gas flow rate of 40 L/min is shown in Fig. 6. The results of measurement of the initial pressure drop at an exhaust gas flow rate of 10 L/min are shown in Fig. 7.

### Comparative Example 2

Using the exhaust gas processing device which was used in Comparative Example 1, the same evaluations as in Example 2 were carried out, except that measurement of the changes in the initial collection efficiency in accordance with the number of times of regeneration was not carried out. The results are shown in Figs. 5, 6, and 7.

### Comparative Example 3

### Fabrication of Exhaust Gas Processing Device

A commercially-available filter (trade name: SiC-DPF manufactured by Ibiden Co., Ltd.) was used as the filter base body. This filter base body was made of SiC, and had the honeycomb structure shown in Fig. 8. The filter base body had a diameter of 30 mm, a length of 50 mm, a cell density of 200 cells per inch², a partitioning wall thickness of 0.36 mm, a porosity of 42%, and a mean pore diameter of 11 µm.

Next, in the same way as in Example 1, this filter base body was wrapped in a cylindrical housing made of stainless steel, and a flow-in port and an exhaust port were provided at the both ends of the housing, and the exhaust gas processing device was fabricated.

### Evaluation

Then, by using the exhaust gas processing device of Comparative Example 3, the same evaluations as in Example 2 were carried out, except that measurement of the changes in the initial collection efficiency in accordance with the number of times of regeneration was not carried out. The results are shown in Figs. 5, 6, and 7.

Next, the flow-in ports of the exhaust gas processing devices of Examples 2 and 3 were connected to the exhaust gas supply source, and the micropore structure was made to be the flow-in surface. This was carried out to confirm the influence on the oxidation function due to the difference in materials which form micropore structures, by ensuring accumulation of the particulate matter onto the micropore structures. Thereafter, exhaust gas containing a particulate matter was made to flow for 90 minutes so as to make the initial pressure drop 0.16kPa, and the pressure drop of the exhaust gas processing devices was measured. The measurement of the pressure drop was carried out at the two exhaust gas temperature levels of 300°C and 400°C. Note that the flow rate was adjusted such that the flow rate of the exhaust gas was 7.8L/min at 300°C and the flow rate of the exhaust gas was 6.5L/min at 400°C in order to make the initial pressure drops at both temperatures the same. Fig. 15 is a graph in which the rate of increase in pressure drop after the exhaust gas has been made to flow for 90 minutes is plotted against the temperature of the exhaust gas. Results of Evaluation

### Effects of Regeneration Heating on Initial Collection Efficiency

As can be understood from the results of Fig. 4, in the exhaust gas processing device of Example 2, even when regeneration processing was carried out repeatedly, the initial collection efficiency did not decrease, and a stable performance was always obtained.

### Effects of Exhaust Gas Flow Rate

As shown in Fig. 5, in the exhaust gas processing device of Example 2, regardless of the exhaust gas flow rate, the initial collection efficiency exceeded 90% and was substantially constant. However, as compared with the exhaust gas processing device of Example 2, in the exhaust gas processing device of Comparative Example 2 in which the structure of the filter base body was the same but the micropore structure was not provided, the initial collection efficiency decreased as the exhaust gas flow rate increased.

In addition, as compared with the exhaust gas processing device of Example 2, in the exhaust gas processing device of Comparative Example 3 in which the structure of the filter base body was different and the micropore structure was not provided, at an exhaust gas flow rate of 10 L/min, an initial collection efficiency which was basically equivalent to that of the exhaust gas processing device of Example 2 was obtained, but the initial collection efficiency decreased as the exhaust gas flow rate increased.

From these results, it can be understood that the dependency of the initial collection efficiency on flow rate is lowered by providing the micropore structure at the filter base body.

### Particulate Matter Collection Efficiency per Particle Diameter

As shown in Fig. 6, in the exhaust gas processing device of Example 2, regardless of the particle diameter of the particulate matter, the initial collection efficiency per particle diameter exceeded 90% and was substantially constant. However, as compared with the exhaust gas processing device of Example 2, in the exhaust gas processing device of Comparative Example 2 in which the structure of the filter base body was the same but the micropore structure was not provided, and in the exhaust gas processing device of Comparative Example 3 in which the structure of the filter base body was different and the micropore structure was not provided, the initial collection efficiency per particle diameter decreased as the particle diameter of the particulate matter increased.

From these results, it can be understood that the dependency, of the initial collection efficiency per particle diameter, on the particle diameter of the particulate matter is lowered by providing the micropore structure at the filter base body. Initial Pressure Drop

From Fig. 7, it can be understood that the initial pressure drop of the exhaust gas processing device of Comparative Example 3 was about 2.5 to 3 times greater than the initial pressure drop of the exhaust gas processing device of Comparative Example 2. This increase in the initial pressure drop is due to the differences in the filter base bodies, and specifically, is due to the decrease in the mean pore diameter and the porosity which are traded-off with the initial collection efficiency.

Further, it can be understood that, as compared with the exhaust gas processing device of Comparative Example 2, the initial pressure drop of the exhaust gas processing device of Example 2 which is provided with the micropore structure is about 2 times greater than the initial pressure drop of the exhaust gas processing device of Comparative Example 2. This increase in the initial pressure drop is due to the provision of the micropore structure.

On the other hand, as can be understood from Fig. 5, at an exhaust gas flow rate of 10 L/min, the initial pressure drop of the exhaust gas processing device of Example 2, which showed an initial collection efficiency that slightly exceeded that of Comparative Example 3 (the collection efficiency in Example 2 was 92%), was about 25% less than the initial pressure drop of the exhaust gas processing device of Comparative Example 3 (which had a collection efficiency of 86%). From this, it can be understood that the exhaust gas processing device of the present invention can keep the initial pressure drop even lower, while obtaining an initial collection efficiency which is equivalent to or higher than that of the conventional exhaust gas processing devices.

Further, from the results shown in Comparative Examples 2 and 3, in the conventional exhaust gas processing devices, in a case in which either one of the features of pressure drop and collection efficiency was improved, the other one feature had to be sacrificed. However, in the exhaust gas processing device of the present invention, the trade-off between these two features can be mitigated, and it is possible to obtain good levels of both a lower pressure drop and a higher collection efficiency.

### Performance of oxidation of particulate matter

As can be seen in Fig. 15, in the exhaust gas processing device of Example 2, the rate of increase in pressure drop was 0.012kPa/h at the exhaust gas temperatures of 300°C and 400°C, and a difference depending on the exhaust gas temperature was not observed.

On the other hand, in the exhaust gas processing device of Example 3, similarly as in the case of the exhaust gas processing device of Example 2, the rate of increase in pressure drop was 0.012kPa/h at the exhaust gas temperature of 300°C, whereas the rate of increase in pressure drop decreased to 0.008kPa/h at the exhaust gas temperature of 400°C which was about 33 % lower than at the exhaust gas temperature of 300°C. These results indicate that, in contrast where the exhaust gas temperature was 300°C, at the exhaust gas temperature of 400°C, the particulate matter once accumulated on the micropore structure was oxidized (combusted) and the amount of accumulated particulate matter was decreased.

From the above results, it was found that the exhaust gas processing device having a micropore structure formed of ceria-zirconia in Example 3 is effective in oxidizing a particulate matter in a range of temperatures from a relatively low temperature of about 400°C or higher, as compared with the exhaust gas processing device having a micropore structure formed of alumina in Example 2.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. An exhaust gas filter including a filter base body which has many pores and has a flow-in surface, in which exhaust gas containing particulate matter flows, and an exhaust surface, from which purified gas is exhausted,
the exhaust gas filter having at least a function of removing the particulate matter from the exhaust gas by passing the exhaust gas through the filter base body from the flow-in surface toward the exhaust surface,
wherein a micropore structure, in which agglomerates of particulates having fine gaps are connectedly provided and which is air-permeable and which collects the particulate matter contained in the exhaust gas, is provided at the filter base body at a surface and/or within the pores which open and communicate the flow-in surface and the exhaust surface to and with one another.

2. The exhaust gas filter of claim 1, wherein a porosity of the micropore structure is within a range of 60 to 90%.

3. The exhaust gas filter of claim 1, wherein the micropore structure is fibrous.

4. The exhaust gas filter of claim 1, wherein the micropore structure contains a material which has heat-resistance and/or a function of oxidizing the particulate matter, and which can be made into particulates of a particle diameter of about 10 nm to 200 nm.

5. The exhaust gas filter of claim 1, wherein the micropore structure is provided in a vicinity of the exhaust surface.

6. The exhaust gas filter of claim 1, wherein a mean pore diameter of the filter base body is within a range of 5 µm to 50 µm.

7. The exhaust gas filter of claim 1, wherein a catalyst, which has a function of oxidizing the particulate matter, is carried on surfaces of walls of the pores of the filter base body.

8. An exhaust gas filter including a filter base body which has many pores and has a flow-in surface, in which exhaust gas containing particulate matter flows, and an exhaust surface, from which purified gas is exhausted,
the exhaust gas filter having at least a function of removing the particulate matter from the exhaust gas by passing the exhaust gas through the filter base body from the flow-in surface toward the exhaust surface,
wherein a micropore structure, whose thickness is 3.5 µm or less and whose mean pore diameter is within a range of 20 nm to 200 nm, is provided within and/or at a surface of the filter base body so as to intersect a direction of passage of the exhaust gas.

9. The exhaust gas filter of claim 8, wherein a porosity of the micropore structure is within a range of 60 to 90%.

10. The exhaust gas filter of claim 8, wherein the micropore structure is fibrous.

11. The exhaust gas filter of claim 8, wherein the micropore structure contains a material which has heat-resistance and/or a function of oxidizing the particulate matter, and which can be made into particulates of a particle diameter of about 10 nm to 200 nm.

12. The exhaust gas filter of claim 8, wherein the micropore structure is provided in a vicinity of the exhaust surface.

13. The exhaust gas filter of claim 8, wherein a mean pore diameter of the filter base body is within a range of 5 µm to 50 µm.

14. The exhaust gas filter of claim 8, wherein a catalyst, which has a function of oxidizing the particulate matter, is carried on surfaces of walls of the pores of the filter base body.

15. A method of manufacturing an exhaust gas filter including a filter base body which has many pores and has a flow-in surface, in which exhaust gas containing particulate matter flows, and an exhaust surface, from which purified gas is exhausted,
the exhaust gas filter having at least a function of removing the particulate matter from the exhaust gas by passing the exhaust gas through the filter base body from the flow-in surface toward the exhaust surface, and
a micropore structure, in which agglomerates of particulates having fine gaps are connectedly provided and which is air-permeable and which collects the particulate matter contained in the exhaust gas, being provided at the filter base body at a surface and/or within the pores which open and communicate the flow-in surface and the exhaust surface to and with one another,
the method comprising:
a micropore structure precursor forming step of forming a micropore structure precursor by adhering/accumulating heat-resistant particulates in a vicinity of the exhaust surface by sucking-in a gas, in which the heat-resistant particulates are dispersed, from the exhaust surface and exhausting the gas toward the flow-in surface; and
a sintering step of forming the micropore structure by sintering the micropore structure precursor by heating the micropore structure precursor.

16. A method of manufacturing an exhaust gas filter including a filter base body which has many pores and has a flow-in surface, in which exhaust gas containing particulate matter flows, and an exhaust surface, from which purified gas is exhausted,
the exhaust gas filter having at least a function of removing the particulate matter from the exhaust gas by passing the exhaust gas through the filter base body from the flow-in surface toward the exhaust surface, and
a micropore structure, whose thickness is 3.5 µm or less and whose mean pore diameter is within a range of 20 nm to 200 nm, being provided within and/or at a surface of the filter base body so as to intersect a direction of passage of the exhaust gas,
the method comprising:
a micropore structure precursor forming step of forming a micropore structure precursor by adhering/accumulating heat-resistant particulates in a vicinity of the exhaust surface by sucking-in a gas, in which the heat-resistant particulates are dispersed, from the exhaust surface and exhausting the gas toward the flow-in surface; and
a sintering step of forming the micropore structure by sintering the micropore structure precursor by heating the micropore structure precursor.

17. An exhaust gas processing device having at least a flow-in port, an exhaust port, a gas flow path connecting the flow-in port and the exhaust port, and a partitioning wall which divides the gas flow path into a flow-in port side and an exhaust port side,
wherein the partitioning wall includes an exhaust gas filter including a filter base body which has many pores and has a flow-in surface, in which exhaust gas containing particulate matter flows, and an exhaust surface, from which purified gas is exhausted,
the exhaust gas filter has at least a function of removing the particulate matter from the exhaust gas by passing the exhaust gas through the filter base body from the flow-in surface toward the exhaust surface,
a micropore structure, in which agglomerates of particulates having fine gaps are connectedly provided and which is air-permeable and which collects the particulate matter contained in the exhaust gas, is provided at the filter base body at a surface and/or within the pores which open and communicate the flow-in surface and the exhaust surface to and with one another, and
the flow-in surface of the exhaust gas filter is provided at the flow-in port side, and the exhaust surface of the exhaust gas filter is provided at the exhaust port side.

18. An exhaust gas processing device having at least a flow-in port, an exhaust port, a gas flow path connecting the flow-in port and the exhaust port, and a partitioning wall which divides the gas flow path into a flow-in port side and an exhaust port side,
wherein the partitioning wall includes an exhaust gas filter including a filter base body which has many pores and has a flow-in surface, in which exhaust gas containing particulate matter flows, and an exhaust surface, from which purified gas is exhausted,
the exhaust gas filter has at least a function of removing the particulate matter from the exhaust gas by passing the exhaust gas through the filter base body from the flow-in surface toward the exhaust surface,
a micropore structure, whose thickness is 3.5 µm or less and whose mean pore diameter is within a range of 20 nm to 200 nm, is provided within and/or at a surface of the filter base body so as to intersect a direction of passage of the exhaust gas, and
the flow-in surface of the exhaust gas filter is provided at the flow-in port side, and the exhaust surface of the exhaust gas filter is provided at the exhaust port side.
